# EUROPÄISCHE PATENTSCHRIFT

(11) **EP 3 475 571 B1**
(45) Veröffentlichungstag und Bekanntmachung des Hinweises auf die Patenterteilung: **21.06.2023**
(21) Anmeldenummer: 17739889.8
(22) Anmeldetag: 23.06.2017
(51) Int. Cl.: F04B 53/10, F04B 53/16, F04B 53/22, F04B 53/00, F04B 1/0452, F16K 27/02, F16K 27/00

(54) **WASSERTEIL EINER KOLBENPUMPE, INSBESONDERE EINER ALS SPÜLPUMPE FUNGIERENDEN KOLBENPUMPE**
WATER PART FOR A PISTON PUMP, IN PARTICULAR OF A PISTON PUMP FUNCTIONING AS A FLUSH PUMP
PARTIE HYDRAULIQUE D'UNE POMPE À PISTONS, EN PARTICULIER D'UNE POMPE À PISTONS FONCTIONNANT EN TANT QUE POMPE DE BALAYAGE

(30) Priorität: 28.06.2016 DE 202016103412 U
(43) Veröffentlichungstag der Anmeldung: 01.05.2019
(73) Patentinhaber: Bentec GmbH Drilling & Oilfield Systems, 48455 Bad Bentheim (DE)
(72) Erfinder: CORDES, Malte, 48455 Bad Bentheim (DE); GELKER, Michael, 49808 Lingen (Ems) (DE)
(74) Vertreter: Werner & ten Brink
(86) Internationale Anmeldenummer: PCT/EP2017/065607
(87) Internationale Veröffentlichungsnummer: WO 2018/001912

(56) Entgegenhaltungen:
- DE-A1-102006 017 036
- DE-A1-102008 060 659
- DE-A1-102011 056 712
- US-A- 3 412 931
- US-A1- 2008 152 523
- US-A1- 2014 086 774
- US-A1- 2014 286 805
- US-A1- 2015 147 194

## Beschreibung

Die Erfindung betrifft ein in der englischsprachigen Fachliteratur als fluid end bezeichnetes sogenanntes Wasserteil einer im Folgenden kurz als Kolbenpumpe bezeichneten, einfach oder doppelt wirkenden Hubkolbenpumpe, insbesondere das Wasserteil einer leistungsstarken Mehrkolbenpumpe, speziell das Wasserteil einer als Spülpumpe auf einer Bohranlage zum Beispiel für Bohrungen auf Kohlenwasserstofflagerstätten oder zur Erschließung von Geothermie fungierenden leistungsstarken Mehrkolbenpumpe, wobei der Begriff Mehrkolbenpumpe Kolben-, Plunger- und Membranpumpen umfasst.

Der Hauptanwendungsfall der hier vorgeschlagenen Neuerung betrifft leistungsstarke Mehrkolbenpumpen, wie sie als Spülpumpen auf einer Bohranlage einsetzbar sind, auch wenn die Neuerung darauf nicht beschränkt ist und auch für Kolbenpumpen allgemeiner Art sowie im Weiteren auch insgesamt für Verdrängerpumpen, insbesondere Verdrängerpumpen mit zumindest einem austauschbaren Druckkörper, in Betracht kommt. Die nachfolgende Beschreibung bezieht sich - ohne Verzicht auf eine weitergehende Allgemeingültigkeit - auf eine Spülpumpe, nämlich eine als Spülpumpe auf einer Bohranlage fungierende leistungsstarke Mehrkolbenpumpe, wobei bei jeder Verwendung des Begriffs "Spülpumpe" auch eine Kolbenpumpe allgemeiner Art mitzulesen ist und als von der hier vorgelegten Beschreibung umfasst gelten soll.

Eine Verdränger-, Kolben- oder Spülpumpe umfasst bekanntlich zwei Funktionsabschnitte, nämlich eine Antriebseinheit und ein als Arbeitsraum fungierendes sogenanntes Wasserteil. Das Wasserteil ermöglicht den eigentlichen Pumpprozess und umfasst zumindest ein druckseitiges Ventil (Druckventil) und zumindest ein saugseitiges Ventil (Saugventil), normalerweise für jeden Kolben der Spülpumpe jeweils ein Saugventil und ein Druckventil. Die Antriebseinheit treibt die Kolben an und deren resultierende oszillierende Bewegung führt zu einem alternierenden Saug- und Druckhub, wobei das Saug- und das Druckventil oder die Saug- und die Druckventile geöffnet und geschlossen werden, um das Wasserteil jeweils zur saug- oder zur druckseitigen Verrohrung zu öffnen.

Eine Spülpumpe dient in grundsätzlich an sich bekannter Art und Weise dazu, beim Bohrbetrieb die sogenannte Bohrspülung unter hohem Druck (zum Beispiel 500 bar) durch den Bohrstrang in das Bohrloch hinab zur Bohrlochsohle und außerhalb des Bohrstrangs (durch den sogenannten Ringraum) wieder hinauf zu pumpen. Speziell die Komponenten des Wasserteils sind dabei starkem Verschleiß durch die abrasive Bohrspülung und das mit der Bohrspülung ausgetragene sogenannte Bohrklein ausgesetzt. Es besteht folglich die Notwendigkeit, das Wasserteil und dessen Komponenten, zum Beispiel die dortigen Ventile, von Zeit zu Zeit auszutauschen. Vergleichbare Anforderungen werden auch an sogenannte Frac Pumps gestellt, die für die Förderung von sogenannten Schiefergasvorkommen eingesetzt werden. Weitere bekannte Anwendungsgebiete und Bauformen können die Bergbauindustrie mit z.B. Membranpumpen bzw. ein Austausch der Kolben durch Plunger darstellen.

Der komplette Austausch eines Wasserteils ist schon aufgrund der dabei zu bewegenden Massen sehr aufwändig. Man ist daher dazu übergegangen, das Wasserteil modular auszuführen, derart, dass jeweils einem Kolben der Spülpumpe ein Wasserteilmodul (fluid end) zugeordnet ist, welches jeweils ein Saugventil und ein Druckventil umfasst. Auch der Austausch solcher einzelner Wasserteilmodule ist immer noch sehr aufwändig. Die zu bewegenden Massen eines Wasserteilmoduls sind erheblich. Zudem müssen oftmals schwer zugängliche Schraubverbindungen gelöst werden. Selbst bei einer in ein Saugteil und ein Druckteil aufgeteilten zweiteiligen Ausführungsform eines Wasserteilmoduls, wie dies zum Beispiel aus der US 2008/152523 A1 bekannt geworden ist, ist noch von Gewichten von1.000 kg und mehr für das Druckteil sowie 450 kg für das Saugteil auszugehen.

Ein jeweils einem Kolben einer Spülpumpe zugeordnetes Wasserteilmodul kann als "Monoblock" aufgefasst werden. Für eine Pumpe mit einem einzelnen Kolben ist eine solche "Monoblock-Lösung" aus der US 3,412,931 (oder - für eine Kraftstoffpumpe - aus der DE 10 2006 017 036) bekannt. Bei der US 3,412,931 umfasst ein mit einem Zylinderblock verbindbarer Zylinderkopf (Monoblock) in seinem Innern ein saugseitiges und ein druckseitiges Ventil sowie zu deren Aufnahme bestimmte Ventilkäfige. Beide Ventilanordnungen sind gleich, aber relativ zueinander umgekehrt angeordnet. Ähnliche Verhältnisse bestehen bei der DE 10 2006 017 036.

Eine Aufgabe der vorliegenden Erfindung besteht darin, die Möglichkeiten zum Austausch von Verschleißteilen bei einer Spülpumpe zu verbessern.

Diese Aufgabe wird mittels eines Wasserteilmoduls und einer Trägereinheit mit den Merkmalen der jeweiligen unabhängigen Ansprüche gelöst. Allgemein basiert die hier vorgestellte Erfindung darauf, dass ein bisher einstückiges oder zweiteiliges Wasserteilmodul in zumindest drei Komponenten aufgeteilt ist. Als zentrale Komponente fungiert dabei eine hier und im Folgenden als Trägereinheit bezeichnete Komponente. Weitere Komponenten sind zwei Ventilmodule, nämlich ein im Folgenden als Saugmodul bezeichnetes saugseitiges Modul sowie ein im Folgenden entsprechend als Druckmodul bezeichnetes druckseitiges Modul. Die Trägereinheit ist zur Anbringung an einer Kolbenpumpe / Hochdruck-Kolbenpumpe, insbesondere einer als Spülpumpe fungierenden Kolbenpumpe, bestimmt und eingerichtet. Zumindest ein Saugmodul und zumindest ein Druckmodul, insbesondere genau ein Saugmodul und genau ein Druckmodul, sind lösbar mit der Trägereinheit verbindbar. Die Ventilmodule (Saug- und Druckmodul) weisen im Innern jeweils einen Ventilsitz für ein Ventil und ein im Ventilsitz platziertes Ventil auf. Das oder jedes Saugmodul und die Trägereinheit sowie das oder jedes Druckmodul und die Trägereinheit sind für eine solche lösbare Verbindbarkeit bestimmt und eingerichtet, zum Beispiel indem die Trägereinheit Sacklochbohrungen mit einem Innengewinde und das oder jedes Saugmodul und das oder jedes Druckmodul durchgehende Bohrungen für in die Innengewinde der Trägereinheit einschraubbare Schraub- oder Gewindebolzen aufweist.

Die Trägereinheit als modulare Basis des Wasserteilmoduls ist ein Aspekt der hier vorgestellten Neuerung. Im montierten und gebrauchsfähigen Zustand ergibt sich als weiterer Aspekt der hier vorgestellten Neuerung ein modulares Wasserteilmodul, welches zur Anbringung an einer Kolbenpumpe / Hochdruck-Kolbenpumpe, insbesondere einer als Spülpumpe fungierenden Kolbenpumpe, bestimmt und eingerichtet ist. Das modulare Wasserteilmodul umfasst die oben erwähnte und im Folgenden mit weiteren Details erläuterte Trägereinheit sowie jeweils zumindest ein mit der Trägereinheit lösbar verbundenes oder lösbar verbindbares Saugmodul und Druckmodul.

Das Saugmodul und das Druckmodul umfassen jeweils ein Ventil mit einem zugehörigen Ventilsitz und Anschlussmöglichkeiten einerseits für eine Verbindung mit einer Trägereinheit und anderseits für einen Mehrfachverteiler (manifold). Das Saugmodul und das Druckmodul sind gleich ausgeführt, wobei "gleich ausgeführt" nicht notwendig meint, dass das Saugmodul und das Druckmodul identisch sind. Die gleiche Ausführung von Saugmodul und Druckmodul erlaubt aber die Anbringung jedes derartigen Moduls entweder auf der Saugseite der Trägereinheit oder auf der Druckseite der Trägereinheit. Umgekehrt ist damit die Trägereinheit so ausgeführt, dass an diese gleich ausgeführte Saug- und/oder Druckmodule anschließbar sind. Zu einer gleichen Ausführung der Saug- und/oder Druckmodule gehört optional auch, dass diese Module jeweils identische Ventile und Ventilsitze enthalten. Die Funktion als Saugmodul oder als Druckmodul ergibt sich demnach nicht aufgrund konstruktiver Einzelheiten des jeweiligen Moduls, sondern aufgrund des Anbringungsorts. Bei einer speziellen Ausführungsform werden an der Trägereinheit zwei nicht nur im obigen Sinne gleich ausgeführte, sondern identische Ventilmodule angebracht, von denen eines als Saugmodul und das andere als Druckmodul fungiert, und ein mittels der Trägereinheit gebildetes Wasserteilmodul umfasst zwei identische Ventilmodule, von denen eines als Saugmodul und das andere als Druckmodul fungiert.

Ein als Saugmodul oder als Druckmodul fungierendes Ventilmodul, insbesondere ein Ventilmodul, dessen Funktion als Saug- oder Druckmodul sich nur durch dessen Anbringungsort ergibt, zeichnet sich durch zumindest zwei geplante Seitenflächen aus, von denen eine als erste oder untere Anschlussfläche und eine andere, an die erste bzw. untere Anschlussfläche angrenzende Seitenfläche als zweite oder seitliche Anschlussfläche fungiert und wobei ein Kanal im Innern des Ventilmoduls zumindest auf einer Seite (einerseits) in der ersten / unteren Anschlussfläche und auf der anderen Seite (andererseits) in der zweiten / seitlichen Anschlussfläche endet. Bei einer speziellen Ausführungsform weist das Ventilmodul eine quaderförmige Grundform mit sechs Seitenflächen auf, wobei eine Seitenfläche als erste / untere Anschlussfläche und eine andere, an die erste / untere Anschlussfläche angrenzende Seitenfläche als zweite / seitliche Anschlussfläche fungiert. Der Kanal im Innern des Ventilmoduls ist mittels eines von dem Ventilmodul umfassten Ventils sperrbar und freigebbar und wird beim Betrieb des Ventilmoduls mittels des Ventils gesperrt und freigegeben, nämlich synchron mit einer Bewegung eines Kolbens der Spülpumpe gesperrt und freigegeben. Indem der Kanal des Ventilmoduls einerseits in der ersten / unteren Anschlussfläche und andererseits in der zweiten/ seitlichen Anschlussfläche endet, ist das Ventilmodul entweder mit der ersten / unteren Anschlussfläche oder mit der zweiten / seitlichen Anschlussfläche unmittelbar an der jeweiligen Spülpumpe odermittels einer an der Spülpumpe angebrachten oder an der Spülpumpe anbringbaren Trägereinheit mittelbar an der Spülpumpe anbringbar. Die nicht zur Anbringung oder zur mittelbaren Anbringung (über die Trägereinheit) an der Spülpumpe verwendete Anschlussfläche steht für den Anschluss eines Mehrfachverteilers für in Richtung auf die Spülpumpe strömende Spülflüssigkeit (Saugseite) oder von der Spülpumpe zum Bohrstrang gepumpte Spülflüssigkeit (Druckseite) zur Verfügung. Jedes an einer Trägereinheit angebrachte Ventilmodul ist damit in vorteilhafter Art und Weise - zum Beispiel für Wartungszwecke - einzeln von der Trägereinheit lösbar, während die Trägereinheit montiert bleibt, ein zuvor an das Ventilmodul angeschlossener Mehrfachverteiler montiert bleibt und das oder jedes andere an der Trägereinheit angebrachte Ventilmodul ebenfalls montiert bleibt. Die im Wartungsfall zu bewegende Masse reduziert sich damit auf die Masse des jeweils zu wartenden Ventilmoduls, was eine erhebliche Vereinfachung und Arbeitserleichterung darstellt. Bei einer besonderen Ausführungsform der Ventilmodule ist ein Ventildeckel, der in grundsätzlich an sich bekannter Art und Weise ein im Innern des Ventilmoduls befindliches Ventil fixiert, an einer der ersten / unteren oder zweiten / seitlichen Anschlussfläche gegenüberliegenden Seitenfläche zugänglich. Dies gewährleistet eine Zugänglichkeit des Ventildeckels, auch wenn das Ventilmodul an der Trägereinheit angebracht ist und an dem Ventilmodul der jeweilige Mehrfachverteiler angebracht ist. Bei einer solchen Ausführungsform ist damit auch der Ventildeckel jedes Ventilmoduls für Wartungszwecke oder dergleichen lösbar, während das jeweilige Ventilmodul selbst montiert bleibt, ein an das Ventilmodul angeschlossener Mehrfachverteiler montiert bleibt und das oder jedes andere Ventilmodul ebenfalls montiert bleibt.

Die oben genannte Aufgabe wird auch mittels eines Wasserteilmoduls, welches zur Anbringung an einer Kolbenpumpe / Hochdruck-Kolbenpumpe, insbesondere einer als Spülpumpe fungierenden Kolbenpumpe, bestimmt und eingerichtet ist, gelöst, indem das Wasserteilmodul eine Trägereinheit der hier und im Folgenden beschriebenen Art sowie jeweils zumindest ein mit der Trägereinheit lösbar verbundenes oder lösbar verbindbares Saug- und Druckmodul der ebenfalls hier und im Folgenden beschriebenen Art umfasst.

Die oben genannte Aufgabe wird schließlich auch mittels einer Kolbenpumpe, insbesondere einer als Spülpumpe fungierenden Kolbenpumpe, mit zumindest einer Trägereinheit oder zumindest einem Wasserteilmodul gelöst. Bei der Trägereinheit, dem Ventilmodul oder dem Wasserteilmodul handelt es sich jeweils um Vorrichtungen wie hier und im Folgenden beschrieben. Eine solche Kolbenpumpe weist bevorzugt eine der Anzahl der Kolben der Kolbenpumpe entsprechende Anzahl von solchen Trägereinheiten und jeweils ein als Saugmodul und als Druckmodul fungierendes solches Ventilmodul oder eine der Anzahl der Kolben entsprechende Anzahl von solchen Wasserteilmodulen auf. Eine solche Kolbenpumpe fungiert bevorzugt als Spülpumpe zum Pumpen von Bohrklein beim Tiefbohren auf Kohlenstofflagerstätten oder Geothermie. Abhängig von der Bauform kann auch eine Zusammenfassung solcher einzelner Trägermodule in einem einzigen Monoblock erfolgen.

Mit der Aufteilung eines bisher einstückigen Wasserteilmoduls (z.B. US 2015/ 0147194 A1) oder eines ebenfalls bekannten zweiteiligen Wasserteilmoduls (z.B. US 2008/152523 A1) in zumindest drei Komponenten, nämlich Trägereinheit, Saugmodul und Druckmodul, ergeben sich diverse Vorteile:
Bekanntlich sind bei Spülpumpen und dergleichen deren Ventile, aber auch die jeweiligen Ventilsitze und Anschlussflächen Verschleißteile. Die Verschlussteile/ Absperrkörper der Ventile können im Bedarfsfall in herkömmlicher Art und Weise ersetzt werden. Im Falle eines Verschleißes eines Ventilsitzes und/oder einer Anschlussfläche können jetzt auch die Ventilmodule insgesamt (Saugmodul mit saugseitigem Ventil, Druckmodul mit druckseitigem Ventil) einzeln getauscht werden. Dabei ist nur das Gewicht des jeweiligen Ventilmoduls zu bewegen. Dieses ist deutlich geringer als das Gewicht eines vorherigen einstückigen Wasserteilmoduls. Bei einem bekannten zweiteiligen Wasserteilmodul umfasst eines der Teile - erstes Teil - das saug- oder druckseitige Ventil, also zum Beispiel das druckseitige Ventil, und das andere Teil - zweites Teil - fungiert entsprechend als druck- bzw. saugseitiges Ventilmodul und umfasst zum Beispiel das saugseitige Ventil. Das erste Teil mit dem druckseitigen Ventil wird an der Spülpumpe angebracht. Das zweite Teil mit dem saugseitigen Ventil wird am ersten Teil angebracht. Das erste Teil umfasst demnach im Innern eines im Wesentlichen massiven Metallblocks einen Kanal einerseits zur Spülpumpe und andererseits zum saugseitigen Ventil und zum druckseitigen Ventil. Das erste Teil ist daher deutlich schwerer als das zweite Teil und ist im Vergleich zu einem Saugmodul oder einem Druckmodul der hier vorgeschlagenen Neuerung ebenfalls deutlich schwerer.

Neben der aufgrund des geringeren Gewichts resultierenden leichteren Handhabbarkeit eines einzelnen Saugmoduls oder eines einzelnen Druckmoduls kommt der Erfindung mit ihrem dreiteiligen Wasserteilmodul zugute, dass jedes Ventilmodul im Bedarfsfall einzeln getauscht werden kann. Bei einem Wasserteilmodul in einer bekannten zweiteiligen Ausführung muss dagegen beim Austausch des vom ersten Teil umfassten Ventils auch das zweite Teil demontiert und später wieder angebracht werden, auch wenn das zweite Teil gar nicht ausgetauscht werden muss.

Ein weiterer wesentlicher Vorteil besteht darin, dass der Trägereinheit die Funktion eines universalen Adapterteils zukommt, so dass die mit der Trägereinheit verbindbaren Ventilmodule ohne konstruktive Änderungen mit verschiedensten Spülpumpen verwendbar sind. Eine notwendige Anpassung an die jeweilige Spülpumpe beschränkt sich auf die Trägereinheit und dort auf die zur Anbringung an der und zum Anschluss an die Spülpumpe zugewandte Seitenfläche. Hier kann sich die Notwendigkeit einer Anpassung an eine jeweilige Anschlusssituation, zum Beispiel eine Anpassung an ein Anschluss-/Bohrbild der jeweiligen Spülpumpe und/oder eine Anpassung an die Querschnitte der Ausgangsöffnung des jeweiligen Zylinders der Spülpumpe, ergeben. Insoweit können für unterschiedliche Spülpumpentypen jeweils passende Trägereinheiten mit bedarfsgemäß großen Seitenflächen zur Anbringung am jeweiligen Spülpumpentyp geschaffen werden, mittels derer einheitliche Ventilmodule, die je nach späterem Anbringungsort an einer Trägereinheit als Saugmodul oder als Druckmodul fungieren, typenübergreifend mit unterschiedlichen Spülpumpen verwendbar sind. Durch diesen Umstand entstehen den Betreibern von nicht homogenen Flotten von Spülpumpen oder sonstigen Pumpen diverse wirtschaftliche und technische Vorteile beim Vereinheitlichen ihrer Systeme

Schließlich geht mit der Aufteilung des Wasserteilmoduls in drei Komponenten, darunter zwei gleiche oder im Wesentlichen gleiche, zumindest gleich ausgeführte Ventilmodule, eine vereinfachte Lagerhaltung einher. Der Betreiber der jeweiligen Spülpumpe muss keine verschiedenen Baugruppen für die Saugseite und die Druckseite auf Lager haben und jedes Ventilmodul kann genauso als Saugmodul verwendet und an die Trägereinheit angebaut werden wie als Druckmodul.

Sämtliche in der hier vorgelegten Beschreibung zitierten Dokumente werden ausdrücklich in den Offenbarungsgehalt der vorliegenden Anmeldung einbezogen, z.B. die US 2015/0147194 A1 hinsichtlich des dort beschriebenen technischen Hintergrunds zur Verwendung einer Kolbenpumpe als Spülpumpe beim Bohrbetrieb.

Aus der US 2015/0147194 A1 ist ein Anschlussmodul zum Anbringen an einer Kolbenpumpe bekannt, welches im Anschlussmodul selbst jeweils ein saugseitiges und ein druckseitiges Ventil umfasst. Ein Anschlussmodul ist anreihbar mit weiteren Anschlussmodulen an der Kolbenpumpe anbringbar. Eine Mehrzahl von Anschlussmodulen ist mit einem saugseitigen und einem druckseitigen Mehrfachverteiler (manifold) verbindbar.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer Ausführungsform der Trägereinheit, welche in ihrem Innern einen Kanal für das mittels der Spülpumpe beim Betrieb gepumpte Medium aufweist, ist dieser Kanal zu drei unterschiedlichen Seitenflächen der Trägereinheit offen, nämlich zu einer Seitenfläche, mit welcher die Trägereinheit im angebrachten Zustand an die Spülpumpe anschließt, einer Seitenfläche, an welcher ein als Saugmodul fungierendes Ventilmodul anbringbar oder angebracht ist, und einer Seitenfläche, an welcher ein als Druckmodul fungierendes Ventilmodul anbringbar oder angebracht ist. Aufgrund der Öffnung des Kanals im Innern der Trägereinheit zu den genannten Seitenflächen fungiert jede der Seitenfläche als Anschlussfläche, nämlich zum Anschluss der Trägereinheit an die jeweilige Spülpumpe, zum Anschluss eines als Saugmodul fungierenden Ventilmoduls an die Trägereinheit sowie zum Anschluss eines als Druckmodul fungierenden Ventilmoduls an die Trägereinheit. Aufgrund jeweils unterschiedlicher, als Anschlussflächen fungierender Seitenflächen ergibt sich ein größtmöglicher Freiraum bei der Montage, also beim Anbringen der Trägereinheit an einer Spülpumpe und/oder beim Anbringen eines Ventilmoduls an der Trägereinheit.

Bei einer besonderen Ausführungsform ist vorgesehen, dass jeweils zwei aneinander angrenzende Rand-, Begrenzungs- oder Seitenflächen einer Trägereinheit und eines Ventilmoduls als Anschlussflächen zum Anbringen jeweils eines Ventilmoduls an einer Trägereinheit fungieren. Eine Rand-, Begrenzungs- oder Seitenfläche der Trägereinheit grenzt an eine andere derartige Fläche der jeweiligen Trägereinheit oder des Ventilmoduls entlang einer beiden Flächen gemeinsamen Kante an. Eine eventuelle Fase oder dergleichen bleibt dabei außer Acht und wird nicht als eigene Rand-, Begrenzungs- oder Seitenfläche aufgefasst. Zwei derart aneinander angrenzende und als Anschlussflächen fungierende Rand-, Begrenzungs- oder Seitenflächen der Trägereinheit schließen einen im weitesten Sinne L-förmigen Kanalabschnitt im Innern der Trägereinheit ein. Zwei ebenso aneinander angrenzende und als Anschlussflächen fungierende Rand-, Begrenzungs- oder Seitenflächen jedes Ventilmoduls schließen ebenfalls einen im weitesten Sinne L-förmigen Kanal im Innern des jeweiligen Ventilmoduls ein. Jede Anschlussfläche eines Ventilmoduls ist an jeder Anschlussfläche der Trägereinheit anbringbar. Dies erlaubt eine größtmögliche Flexibilität beim Anbringen der Ventilmodule an der Trägereinheit. Zum Beispiel können alle Ventilmodule so angebracht werden, dass alle Ventildeckel von oben zugänglich sind und entsprechend nach oben weisen. Dafür werden die Ventilmodule so angebracht, dass die von den Anschlussseiten verschiedenen Seitenflächen mit den Ventildeckeln horizontal orientiert sind oder zumindest nach oben weisen. Genauso können alle Ventilmodule so angebracht werden, dass alle Ventildeckel von der Seite zugänglich sind und entsprechend zur Seite weisen. Dafür werden die Ventilmodule so angebracht, dass die von den Anschlussseiten verschiedenen Seitenflächen mit den Ventildeckeln vertikal orientiert sind oder zumindest zur Seite weisen. Genauso ist eine Mischkonfiguration möglich, zum Beispiel derart, dass die Ventildeckel der als Saugmodule fungierenden Ventilmodule zur Seite weisen und die Ventildeckel der als Druckmodule fungierenden Ventilmodule nach oben weisen oder umgekehrt. Bei einer besonderen, optionalen Ausführungsform zeichnet oder zeichnen sich die Trägereinheit und/oder das Ventilmodul durch jeweils zueinander rechtwinklige Anschlussflächen aus.

Bei einer besonderen Ausführungsform eines Ventilmoduls, welches eine untere Anschlussfläche und eine seitliche Anschlussfläche aufweist, ist vorgesehen, dass dieses zum Anschluss des Ventilmoduls an eine Trägereinheit entweder mittels der unteren Anschlussfläche oder der seitlichen Anschlussfläche eine Mehrzahl von jeweils von einer Seitenfläche zu einer gegenüberliegenden Seitenfläche durchgehenden Bohrungen aufweist, nämlich eine Mehrzahl senkrecht zur unteren Anschlussfläche verlaufende, durchgehende und einerseits in der unteren Anschlussfläche und andererseits in einer der unteren Anschlussfläche gegenüberliegenden Seitenfläche des Ventilmoduls endende Bohrungen sowie eine Mehrzahl senkrecht zur seitlichen Anschlussfläche verlaufende, durchgehende und einerseits in der seitlichen Anschlussfläche und andererseits in einer der seitlichen Anschlussfläche gegenüberliegenden Seitenfläche des Ventilmoduls endende Bohrungen. Diese Bohrungen erlauben jeweils die Einführung eines Schraub- oder Gewindebolzens oder dergleichen, der auf Seiten der jeweiligen Anschlussfläche in ein Innengewinde in der anschließenden Anschlussfläche der Trägereinheit eingeschraubt wird. Die Orientierung der Bohrungen senkrecht zur jeweiligen Anschlussfläche bedeutet, dass die Bohrungen der beiden Anschlussflächen bei einem quaderförmigen Ventilmodul im Innern des Ventilmoduls ebenfalls senkrecht zueinander verlaufen und sich gegebenenfalls sogar kreuzen, wobei sich kreuzende Bohrungen eine kleine Bauform des Ventilmoduls erlauben.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- Fig. 1: eine Spülpumpe mit mehreren Wasserteilmodulen gemäß der hier vorgeschlagenen Neuerung,
- Fig. 2: eine Trägereinheit eines Wasserteilmoduls gemäß Figur 1,
- Fig. 3: ein einzelnes Wasserteilmodul gemäß Figur 1 mit der davon umfassten Trägereinheit sowie mit zwei an der Trägereinheit angebrachten Ventilmodulen in einer Schnittdarstellung ,
- Fig. 4: eine weitere Ausführungsform einer Spülpumpe mit daran angebrachten modularen Wasserteilmodulen,
- Fig. 5 bis 12: unterschiedliche Konfigurationen einzelner und mehrerer Wasserteilmodule oder Wasserteile für eine Kolbenpumpe.

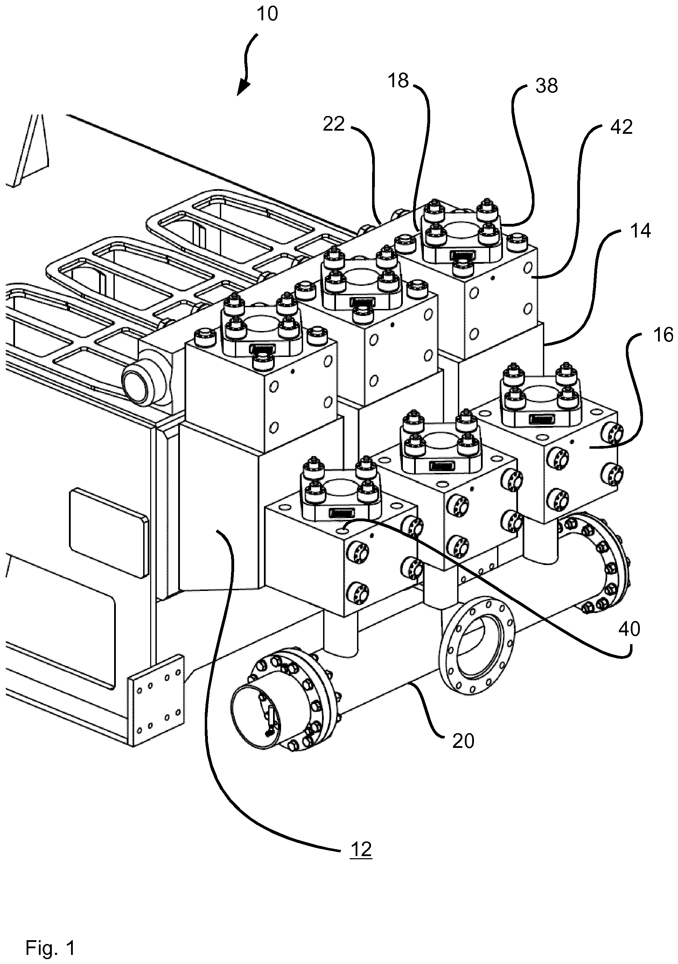

Die Darstellung in Figur 1 zeigt in einer schematisch vereinfachten isometrischen Ansicht einen Teil einer an sich bekannten, als Spülpumpe 10 fungierenden Mehrkolbenpumpe. Für weitere Einzelheiten zur Spülpumpe 10 kann auf die DE 10 2011 056 712 A1 verwiesen werden, deren vollständiger Offenbarungsgehalt zur Vermeidung unnötiger Wiederholungen mit diesem Hinweis als in die hier vorgelegte Beschreibung einbezogen gelten soll.

An der Spülpumpe 10, nämlich am sogenanntem Wasserteil der Spülpumpe 10, sind entsprechend der Anzahl der nicht sichtbaren Kolben drei selbst als Teil des Wasserteils der Spülpumpe 10 fungierende Wasserteilmodule 12 (nur eines bezeichnet in Fig. 1) angebracht. Jedes Wasserteilmodul 12 umfasst drei Grundkomponenten, nämlich eine Trägereinheit 14 sowie ein als Saugmodul 16 bezeichnetes saugseitiges Ventilmodul und ein als Druckmodul 18 bezeichnetes druckseitiges Ventilmodul. Die Wasserteilmodule 12 sind über einen Mehrfachverteiler (manifold), nämlich einen saugseitigen Mehrfachverteiler 20 und einen druckseitigen Mehrfachverteiler 22, in an sich bekannter Art und Weise miteinander verbunden. Mittels des saugseitigen Mehrfachverteilers 20 sind die Saugmodule 16 miteinander verbunden. Mittels des druckseitigen Mehrfachverteilers 22 sind die Druckmodule 18 miteinander verbunden. Vom druckseitigen Mehrfachverteiler 22 führt beim Betrieb der Spülpumpe 10 eine hier nicht gezeigte Rohrleitung zum Bohrloch, mittels derer das mit der Spülpumpe 10 gepumpte Medium, insbesondere Spülflüssigkeit, zum Bohrloch gelangt und dort zur Spülung des Bohrlochs wirksam ist. Zum saugseitigen Mehrfachverteiler 20 führt beim Betrieb der Spülpumpe 10 eine hier ebenfalls nicht gezeigte Rohrleitung zu einem Spülmittelreservoir, aus welchem mittels der Spülpumpe 10 das Medium angesaugt wird.

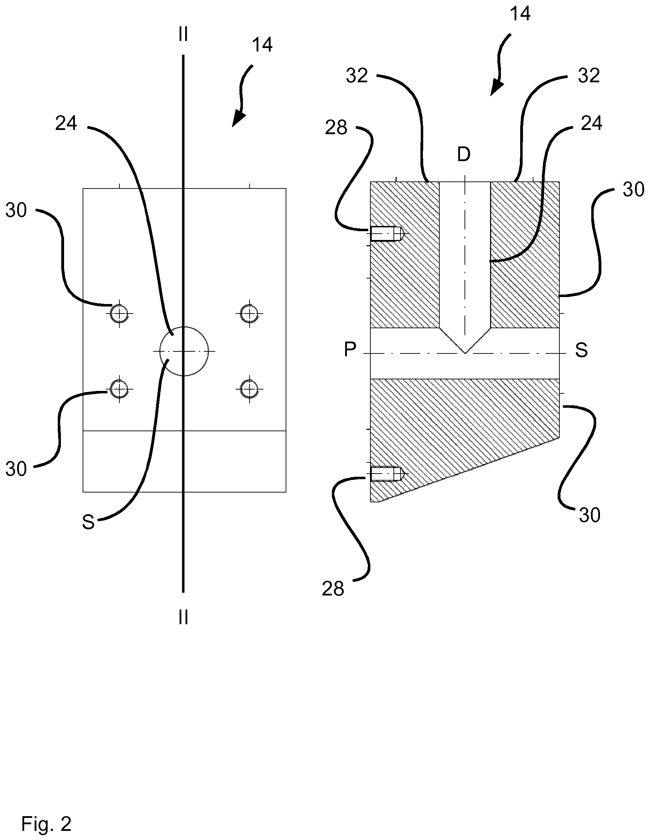

Die Darstellung in Figur 2 zeigt die Trägereinheit 14 in einer schematisch vereinfachten Form und zwar auf der linken Seite in einer Draufsicht auf diejenige Seitenfläche, an welche eines der Ventilmodule, zum Beispiel das Saugmodul 16, anbringbar und anschließbar ist, und auf der rechten Seite in einer Schnittdarstellung mit einer Schnittebene entlang der auf der linken Seite gestrichelt gezeichneten Linie II-II.

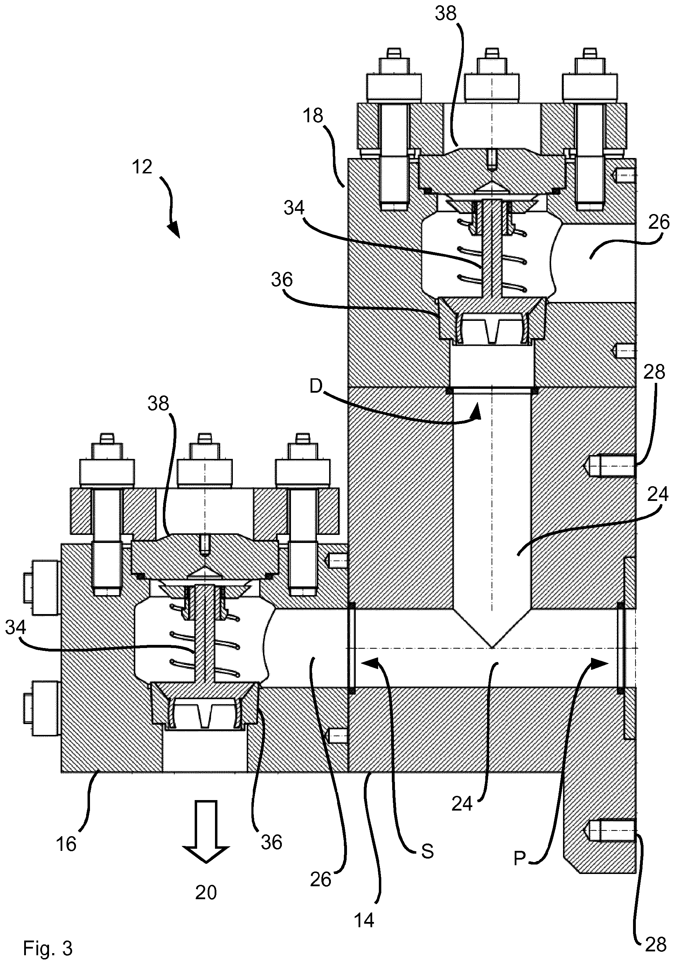

Die Trägereinheit 14 ist als massives Bauteil ausgeführt, insbesondere als massives Metallbauteil. Im Innern weist die Trägereinheit 14 einen Kanal 24 auf, von dem auf der linken Seite der Darstellung in Figur 2 die Öffnung zu einem der Ventilmodule 16, 18, zum Beispiel zum Saugmodul 16, erkennbar ist. In der auf der rechten Seite der Darstellung in Figur 2 gezeigten Schnittdarstellung ist eine bei der gezeigten Ausführungsform im Wesentlichen T-förmige Struktur des Kanals 24 im Innern der Trägereinheit 14 erkennbar. Zur Veranschaulichung sind mit Buchstaben die einzelnen Öffnungen des Kanals 24 in unterschiedlichen Seitenflächen der Trägereinheit 14 bezeichnet. Bei der gezeigten Ausführungsform ist die mit "P" bezeichnete Öffnung im an einer Spülpumpe 10 angebrachten Zustand der Trägereinheit 14 der Spülpumpe 10 zugewandt ("P" = zur Spülpumpe 10) und die Öffnung fluchtet mit einer entsprechenden Ausgangsöffnung eines Zylinders der Spülpumpe 10. Die beiden mit "S" und "D" bezeichneten Öffnungen sind bei der gezeigten Ausführungsform für den Anschluss eines Saugmoduls 16 bzw. eines Druckmoduls 18 vorgesehen ("S" = zum Saugmodul 16; "D" = zum Druckmodul 18). Jeweils ein Saugmodul 16 und ein Druckmodul 18 werden an den jeweiligen Seitenflächen der Trägereinheit 14, in welchen die Öffnungen "S" und "D" enden, angebracht und die Öffnungen "S" und "D" fluchten mit einem Kanal 26 (Fig. 3) im Innern des jeweiligen Ventilmoduls 16, 18.

Der Kanal 24 im Innern der Trägereinheit 14 ist demnach zu drei jeweils als Anschlussflächen fungierenden Seitenflächen der Trägereinheit 14 offen, nämlich zu einer Seitenfläche, mit welcher die Trägereinheit 14 im angebrachten Zustand an die Spülpumpe 10 anschließt (Öffnung "P"), einer Seitenfläche, an welcher ein als Saugmodul 16 fungierendes Ventilmodul 16 anbringbar oder angebracht ist (Öffnung "S"), und einer Seitenfläche, an welcher ein als Druckmodul 18 fungierendes Ventilmodul 18 anbringbar oder angebracht ist (Öffnung "D").

Bei der gezeigten Ausführungsform schließt die Seiten-/Anschlussfläche mit der Öffnung "D" an die Seiten-/Anschlussfläche mit der Öffnung "P" an und schließt mit dieser einen rechten Winkel ein. Genauso schließt die Seiten-/Anschlussfläche mit der Öffnung "S" an die Seiten-/Anschlussfläche mit der Öffnung "D" an und schließt mit dieser ebenfalls einen rechten Winkel ein. Dabei stellt das rechtwinklige Aufeinandertreffen der Anschlussflächen eine besondere, grundsätzlich optionale Ausführungsform dar. Zum Beispiel kann die Anschlussfläche mit der Öffnung "P" mit der angrenzenden Anschlussfläche mit der Öffnung "D" auch einen spitzen Winkel (< 90°) einschließen. Dies führt bei einer im angebrachten Zustand vertikal orientierten Anschlussfläche mit der Öffnung "P" zu einer gegenüber der Horizontalen geneigten Anschlussfläche mit der Öffnung "D". Wenn die Anschlussfläche mit der Öffnung "S" mit der Anschlussfläche mit der Öffnung "D" weiterhin einen rechten Winkel einschließt, führt dies bei einem solchen Ventilmodul 16, 18 dazu, dass die Anschlussfläche mit der Öffnung "S" gegenüber der Vertikalen geneigt ist. Eine solche Ausführungsform des Ventilmoduls 16, 18 kommt alternativ zu einer Ausführungsform mit horizontal und vertikal ausgerichteten Seiten-/Anschlussflächen ebenfalls in Betracht. Genauso kommt eine Ausführungsform in Betracht, bei welcher zum Beispiel die obere Anschlussfläche mit der Öffnung "D" gegenüber der Horizontalen geneigt ist und bei welcher die seitliche Anschlussfläche mit der Öffnung "S" vertikal und parallel zur Anschlussfläche mit der Öffnung "P" orientiert ist.

Auch die T-förmige Struktur des Kanals 24 im Innern der Trägereinheit 24 ist lediglich beispielhaft gezeigt und insoweit nicht einschränkend zu verstehen. Zum Beispiel kann der Kanalabschnitt von der Öffnung "P" zur Öffnung "S" anstelle eines im Wesentlichen horizontalen (bezogen auf die Darstellung in Fig. 2) Verlaufs auch geneigt verlaufen, zum Beispiel mit einer im Vergleich zur Öffnung "P" höheren Öffnung "S" oder einer im Vergleich zur Öffnung "P" niedrigeren Öffnung "S". Genauso muss der in der Öffnung "D" endende Kanalabschnitt nicht vertikal (ebenfalls bezogen auf die Darstellung in Fig. 2) verlaufen und kann ebenfalls geneigt sein.

Auf der rechten Seite der Darstellung in Figur 2 sind Sacklöcher 28, 30 gezeigt. Die Sacklöcher 28 sind gezeigt, um eine Möglichkeit zur Anbringung der Trägereinheit 14 an der für deren Anbringung vorgesehenen Seitenwand der Spülpumpe 10 zu veranschaulichen. Es ist darauf hinzuweisen, dass sich diese Sacklöcher 28 nicht notwendig in der Schnittebene II-II befinden. Genauso können sich jeweils zwei Sacklochpaare 28 in gleichem oder im Wesentlichen gleichem Abstand von der Schnittebene II-II näher an den vertikalen Seitenflächen der Trägereinheit 14 (also je ein Sackloch 28 im Bereich der Ecken der Trägereinheit 14) befinden. Eine Alternative zu Sacklöchern sind Durchgangsbohrungen (nicht gezeigt) durch die Trägereinheit 14. In solche Durchgangsbohrungen sind Gewindeschrauben oder Gewindebolzen einführbar und in ein mit der jeweiligen Durchgangsbohrung fluchtendes Gewinde der Seitenwand der Spülpumpe 10 einschraubbar.

Die Sacklöcher 30 dienen zur mit der Öffnung "S" fluchtenden Anbringung eines Ventilmoduls 16, 18 an der betreffenden Seitenfläche der Trägereinheit 14, also zum Beispiel zur Anbringung eines als Saugmodul 16 fungierenden Ventilmoduls 16. Auf der linken Seite der Darstellung in Fig. 2 sind nur zwei von vier regelmäßig um die Öffnung "S" verteilten Sacklöcher 30 bezeichnet. Auf der rechten Seite der Darstellung in Fig. 2 ist der Ort der Sacklöcher 30 bezeichnet. Die Sacklöcher selbst sind aufgrund der gewählten Schnittlinie II-II nicht gezeigt.

Die Sacklöcher 32 dienen zur mit der Öffnung "D" fluchtenden Anbringung eines Ventilmoduls 16, 18 an der betreffenden Seitenfläche der Trägereinheit 14, also zum Beispiel zur Anbringung eines als Druckmodul 18 fungierenden Ventilmoduls 18.

Die Darstellung in Figur 3 zeigt einen Schnitt durch das Wasserteilmodul 12 in Form eines Schnitts durch die davon umfasste Trägereinheit 14 sowie durch die ebenfalls davon umfassten und jeweils an der Trägereinheit 14 angebrachten Ventilmodule 16, 18. Im Innern jedes Ventilmoduls 16, 18 sind das Ventil 34 und dessen Ventilsitz 36 erkennbar. Das Ventil 34 öffnet oder verschließt den im Innern des Ventilmoduls 16, 18 verlaufenden Kanal 26. Der Kanal 26 ist bei der gezeigten Ausführungsform um 90° abgewinkelt und jeweils eine Öffnung des Kanals 26 befindet sich in aneinander angrenzenden Seitenflächen des im Wesentlichen quaderförmigen Ventilmoduls 16, 18.

Die Richtung der bei einer Ansteuerung des Ventils 34 resultierenden translatorischen Bewegung wird im Folgenden als Bezugsgröße und als Definition einer Hochachse des Ventilmoduls 16, 18 verwendet. Entlang dieser Hochachse befindet sich in Richtung einer Verlängerung des dazu parallel verlaufenden Abschnitts des Kanals 26 ein lösbar mit dem Ventilmodul 16, 18 verbindbarer Ventildeckel 38, welcher in an sich bekannter Art und Weise das Ventil 34 im Innern des Ventilmoduls 16, 18 fixiert. Für eine Möglichkeit für eine vorteilhafte Anbringung eines Ventildeckels 38 an einem Ventilmodul 16, 18 kann auf die DE 10 2011 056 712 A1 mit dem Titel "Ventilabdeckung für eine Spülpumpe beim Tiefbohrbetrieb" verwiesen werden, deren vollständiger Offenbarungsgehalt zur Vermeidung unnötiger Wiederholungen mit diesem Hinweis als in die hier vorgelegte Beschreibung einbezogen gelten soll.

In der Darstellung in Figur 3 ist erkennbar, dass beide gezeigten Ventilmodule 16, 18 gleich ausgeführt sind, so dass jedes Ventilmodul 16, 18 sowohl an der Seitenfläche der Trägereinheit 14 mit der Öffnung "S" wie auch an der Seitenfläche der Trägereinheit 14 mit der Öffnung "D" anbringbar ist. Der abgewinkelte Verlauf des Kanals 26 im Innern der Ventilmodule 16, 18 ermöglicht deren Verwendung entweder als Saugmodul 16 oder als Druckmodul 18 und entsprechend die saugseitige oder druckseitige Anbringung an der Trägereinheit 14. Bereits erwähnt wurde, dass der Kanal 26 bei einer quaderförmigen oder im Wesentlichen quaderförmigen Geometrie des Ventilmoduls 16, 18 zu zwei aneinander angrenzenden Seitenflächen des Ventilmoduls 16, 18 offen ist. Die dem Ventildeckel 38 gegenüberliegende Seitenfläche mit der dortigen Öffnung des Kanals 26 wird im Folgenden als untere Anschlussfläche bezeichnet. Die Seitenfläche mit der anderen Öffnung des Kanals 26 wird im Folgenden als seitliche Anschlussfläche bezeichnet.

Zur Anbringung des Ventilmoduls 16, 18 an einer Trägereinheit 14 weist das Ventilmodul 16, 18 durchgehende Bohrungen 40, 42 (Fig. 1) auf, nämlich von der unteren Anschlussseite zur Seitenfläche mit dem Ventildeckel 38 durchgehende und entsprechend parallel zur Hochachse des Ventilmoduls 16, 18 verlaufende Bohrungen 40 sowie von der seitlichen Anschlussseite zur gegenüberliegenden Seitenfläche durchgehende und entsprechend senkrecht zur Hochachse verlaufende Bohrungen 42. In diese Bohrungen 40, 42 (in der Darstellung in Figur 1 ist jeweils nur für ein Ventilmodul 16, 18 eine von dort insgesamt vier gezeigten Bohrungen mit der Bezugsziffer bezeichnet) sind je nach Anschluss des Ventilmoduls 16, 18 mittels der unteren oder der seitlichen Anschlussfläche an eine Trägereinheit 14 Schraub- oder Gewindebolzen einführbar und das jeweilige Ventilmodul 16, 18 ist mittels solcher Schraub- oder Gewindebolzen an der Trägereinheit 14 fixierbar. Zur Anbringung eines Ventilmoduls 16, 18 an der Trägereinheit 14 wirksame Schraub- oder Gewindebolzen sind in der Darstellung in Figur 1 gezeigt (bei der gezeigten Ausführungsform jeweils vier an allen Ecken des jeweiligen Ventilmoduls 16, 18).

In der Darstellung in Figur 1 ist erkennbar, dass die als Saugmodule 16 bezeichneten Ventilmodule 16 mit ihren seitlichen Anschlussflächen an der Trägereinheit 14 angebracht sind und dass der diese Ventilmodule 16 verbindende Mehrfachverteiler 20 an deren unteren Anschlussflächen angebracht ist. Demgegenüber sind die als Druckmodule 18 bezeichneten Ventilmodule 18 mit ihren unteren Anschlussflächen an der Trägereinheit 14 angebracht und der diese Ventilmodule 18 verbindende Mehrfachverteiler 22 ist an deren seitlichem Anschlussflächen angebracht. Jedes Ventilmodul 16, 18 - also dessen Kanal 26 - ist ausgehend von der unteren Anschlussfläche bis zur seitlichem Anschlussfläche durchströmbar. Bei den als Saugmodul 16 bezeichneten Ventilmodulen 16 tritt das mittels der Spülpumpe 10 gepumpte Medium über den an deren untere Anschlussflächen angeschlossenen saugseitigen Mehrfachverteiler 20 in die Saugmodule 16 ein und gelangt über die seitlichen Anschlussflächen in die Trägereinheit 14. Bei den als Druckmodul 18 bezeichneten Ventilmodulen 18 tritt das mittels der Spülpumpe 10 gepumpte Medium über die an deren untere Anschlussflächen anschließende Trägereinheit 14 in die Druckmodule 18 ein und gelangt über deren seitliche Anschlussflächen in den druckseitigen Mehrfachverteiler 22 und vor dort über nicht gezeigte Rohrleitungen zum Bohrloch zur Spülung des Bohrlochs mittels der Spülflüssigkeit.

Bei der in Figur 1 gezeigten Ausführungsform sind alle Ventilmodule 16, 18 so an der Trägereinheit 14 angebracht, dass deren Ventildeckel 38 nach oben weisen. Alternativ ist zum Beispiel auch eine Anbringung der Ventilmodule 16, 18 an der Trägereinheit 14 möglich, bei der alle Ventildeckel 38 zur Seite weisen. Ebenso ist eine Mischkonfiguration möglich, also zum Beispiel eine Anbringung, bei der die Ventildeckel 38 der als Druckmodule 18 bezeichneten Ventilmodule 18 (wie gezeigt) nach oben weisen und bei der die Ventildeckel 38 der als Saugmodule 16 bezeichneten Ventilmodule 16 zur Seite weisen.

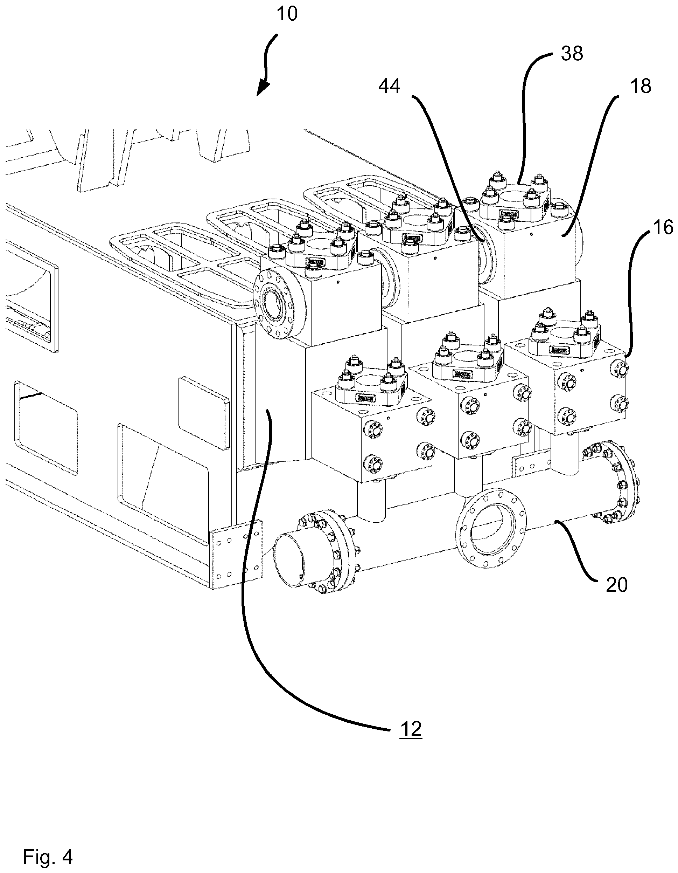

Die Darstellung in Figur 4 zeigt eine Spülpumpe 10 sowie daran angebrachte modulare Wasserteilmodule 12, bei denen im Unterschied zu der Ausführungsform gemäß Figur 1 einzelne Ventilmodule 16, 18 nicht mittels eines Mehrfachverteilers 20, 22, sondern mittels einzelner zwischen jeweils zwei benachbarten Ventilmodulen 16, 18 platzierter rohrartiger Verbindungsstücke 44 mit seitlichen Flanschen verbunden sind. Bei der gezeigten Ausführungsform befinden sich die Verbindungsstücke 44 zwischen den als Druckmodul 18 bezeichneten Ventilmodulen 18. Zusätzlich oder alternativ können sich auch zwischen den als Saugmodul 16 bezeichneten Ventilmodulen 16 solche Verbindungsstücke 44 befinden. Ventilmodule 16, 18 zur Verwendung mit solchen Verbindungstücken 44 weisen eine untere oder seitliche Anschlussfläche zur Anbringung an einer Trägereinheit 14 und eine dortige Öffnung des Kanals 26 auf. Darüber hinaus weisen solche Ventilmodule 16, 18 in von der Anschlussfläche verschiedenen und einander gegenüberliegenden Seitenflächen weitere Öffnungen des Kanals 26 zur dortigen Anbringung jeweils eines Verbindungsstücks 44 oder einer weiterführenden Rohrleitung auf.

Die Ausführungsform gemäß Figur 4 ist neben der Ausführungsform gemäß Figur 1 ein weiteres Beispiel für ein zur Anbringung an einer Spülpumpe 10 bestimmtes Wasserteilmodul 12, welches eine Trägereinheit 14 sowie jeweils ein mit der Trägereinheit 14 lösbar verbundenes oder lösbar verbindbares Saugmodul 16 und Druckmodul 18 umfasst.

Bei einer nicht gezeigten Ausführungsform, bei der sowohl die als Saugmodul 16 wie auch die als Druckmodul 18 bezeichneten Ventilmodule 16, 18 mittels zwischen jeweils zwei benachbarten Ventilmodulen 16, 18 platzierter Verbindungsstücke 44 verbunden sind, können gleich ausgeführte Ventilmodule 16, 18 verwendet werden, sofern akzeptiert wird, dass neben den nach oben ausgerichteten Ventildeckeln 38 der als Druckmodul 18 bezeichneten Ventilmodule 18 die Ventildeckel 38 der als Saugmodul 16 bezeichneten Ventilmodule 16 zur Seite ausgerichtet sind. Dann fungiert jeweils die der Seitenfläche mit dem Ventildeckel 38 gegenüberliegende Seitenfläche als Anschlussfläche zur Anbringung des jeweiligen Ventilmoduls 16, 18 an der Trägereinheit 14. Wenn besonderer Wert darauf gelegt wird, dass alle Ventildeckel 38 nach oben oder zur Seite ausgerichtet sind, sind zwei unterschiedliche Konfigurationen von Ventilmodulen 16, 18 erforderlich. Bei einem Ventilmodul 16, 18 gemäß einer ersten Konfiguration fungiert die Seitenfläche, welche der Seitenfläche mit dem Ventildeckel 38 gegenüberliegt, als Anschlussfläche zur Anbringung an der Trägereinheit 14. Bei einem Ventilmodul 16, 18 gemäß einer zweiten Konfiguration fungiert eine der an die beiden zur Anbringung eines Verbindungsstücks 44 oder einer weiterführenden Rohrleitung bestimmten Seitenflächen angrenzende Seitenfläche als Anschlussfläche zur Anbringung an der Trägereinheit 14.

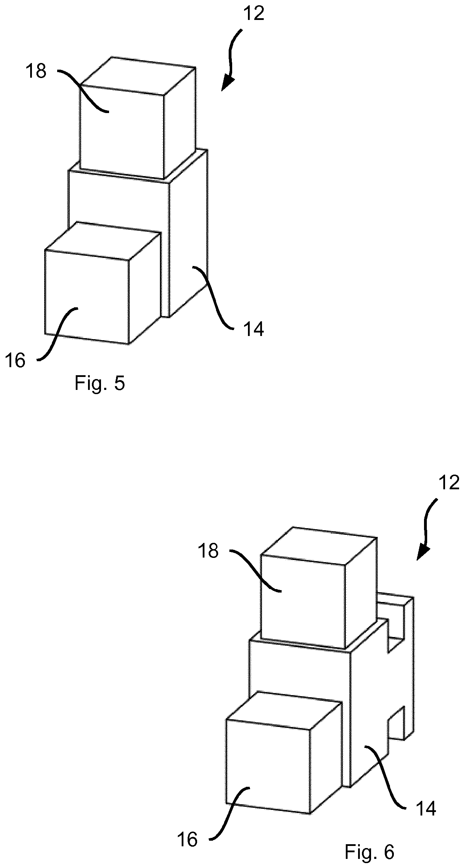

Die Darstellungen in Figur 5 und Figur 6 zeigen jeweils - schematisch vereinfacht - ein Wasserteilmodul 12 mit einer Trägereinheit 14 als Basis und zwei an der Trägereinheit 14 angebrachte Ventilmodule 16, 18, von denen eines als Saugmodul und eines als Druckmodul fungiert. Die beiden Darstellungen sollen unterschiedliche Möglichkeiten zur Anbringung des Wasserteilmoduls 12 an der jeweiligen Spülpumpe 10, nämlich unterschiedliche Möglichkeiten zur Anbringung der Trägereinheit 14 des Wasserteilmoduls 12 an der Spülpumpe 10, veranschaulichen. Bei der in Figur 5 gezeigten Ausführungsform erfolgt die Anbringung mittels von innen aus dem Gehäuse der Spülpumpe 10 herausgeführter und auf Seiten der Trägereinheit 14 in dortige Gewindebohrungen eingreifender Gewindebolzen. Bei der in Figur 6 gezeigten Ausführungsform erfolgt die Anbringung mittels Gewindebolzen, die durch einen Fußabschnitt der Trägereinheit 14 in Gewindebohrungen im Gehäuse der Spülpumpe führen.

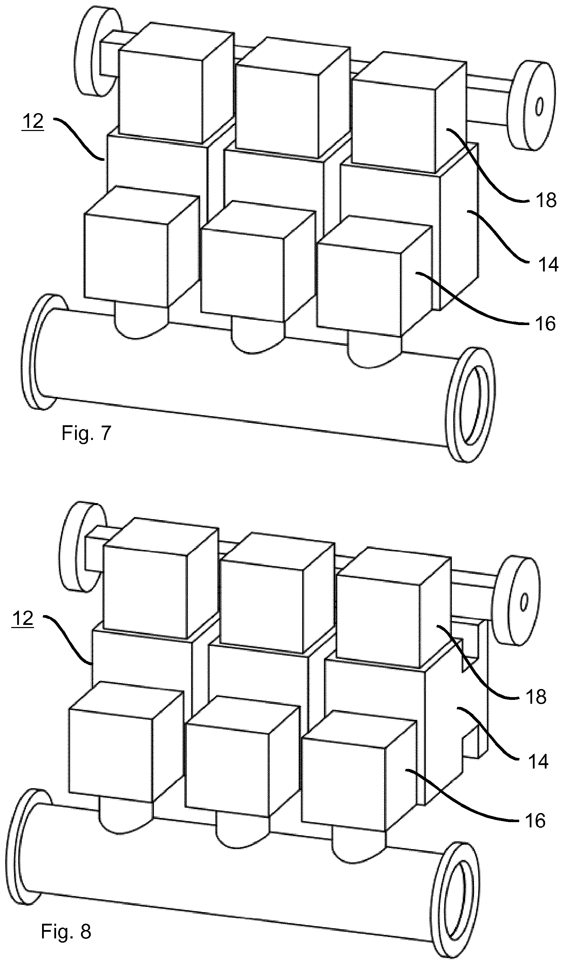

Die Darstellungen in Figur 7 und Figur 8 zeigen jeweils ein Wasserteil einer selbst nicht dargestellten Spülpumpe 10, wobei das Wasserteil jeweils eine Mehrzahl von Wasserteilmodulen 12 gemäß Figur 5 und Figur 6 umfasst, zum Beispiel eine mit der Anzahl der Kolben der Spülpumpe 10 korrespondierende Anzahl von Wasserteilmodulen 12. Stromaufwärts und stromabwärts der einzelnen Ventilmodule 16, 18 ist jeweils ein Mehrfachverteiler (saugseitiger Mehrfachverteiler, druckseitiger Mehrfachverteiler) gezeigt.

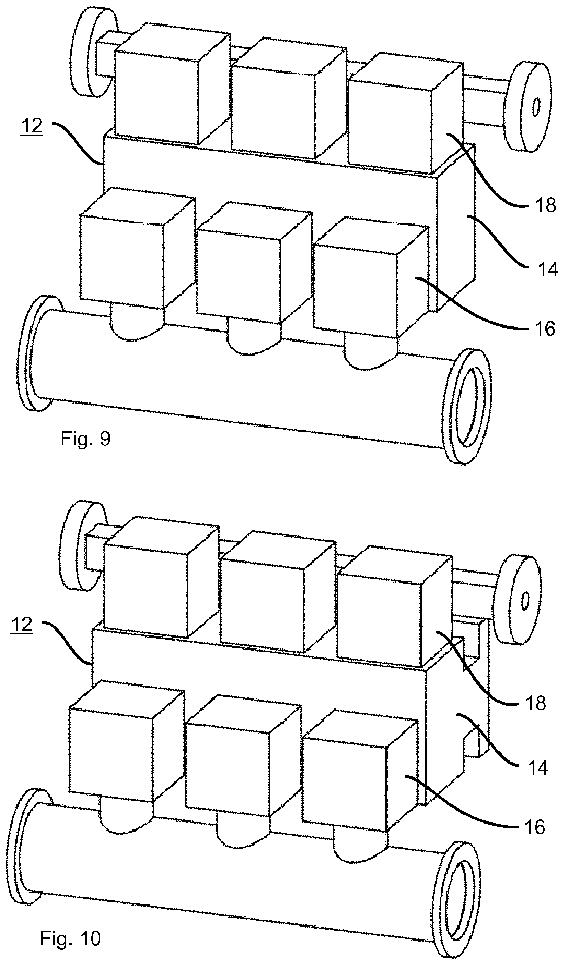

Die Darstellungen in Figur 9 und Figur 10 zeigen jeweils ein Wasserteil einer selbst nicht dargestellten Spülpumpe 10, wobei das Wasserteil für alle davon umfasste Ventilmodule 16, 18 eine gemeinsame Trägereinheit 14 umfasst. Für die Anbringung einer solchen einstückigen Trägereinheit 14 an der jeweiligen Spülpumpe 10 gilt das oben im Zusammenhang mit der Erläuterung der Darstellungen in Figur 5 und Figur 6 Gesagte entsprechend. Stromaufwärts und stromabwärts der einzelnen Ventilmodule 16, 18 ist wieder jeweils ein Mehrfachverteiler (saugseitiger Mehrfachverteiler, druckseitiger Mehrfachverteiler) gezeigt.

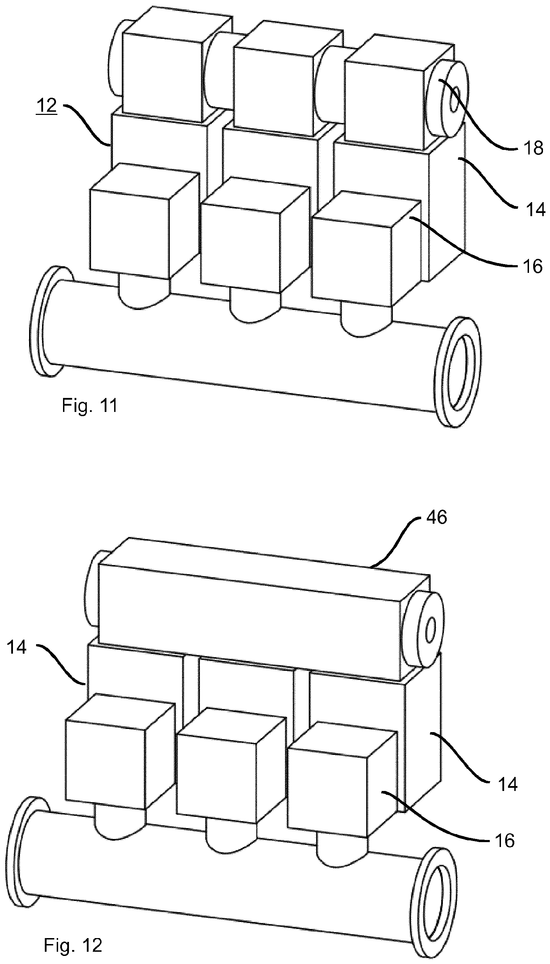

Die Darstellung in Figur 11 zeigt ein Wasserteil einer nicht dargestellten Spülpumpe 10, bei dem einzelne Ventilmodule 16, 18 mittels zwischen jeweils zwei benachbarten Ventilmodulen 16, 18 platzierter Verbindungsstücke 44 verbunden sind. Bei einer Verwendung solcher Verbindungsstücke 44 wird ein zusätzlicher Mehrfachverteiler entbehrlich. Eine Verbindung mehrerer Ventilmodule 16, 18 mittels solcher Verbindungsstücke 44 kann auf der Saugseite und/oder auf der Druckseite des Wasserteils vorgesehen sein.

Die Darstellung in Figur 12 zeigt ein Wasserteil einer nicht dargestellten Spülpumpe 10, mit einer mehrere Ventile umfassenden Ventileinheit 46 anstelle einzelner Ventilmodule 16, 18. Anstelle einer einzelnen Ventileinheit 46 einerseits und mehrerer einzelner Ventilmodule 16, 18 andererseits kann das Wasserteil auch zwei solche Ventileinheiten 46 umfassen, wobei eine Ventileinheit 46 als saugseitige Ventileinheit 46 und eine andere Ventileinheit 46 als druckseitige Ventileinheit 46 fungiert. Bei nur einer einzelnen (saug- oder druckseitigen) Ventileinheit 46 und im Übrigen separaten Ventilmodulen 16, 18 kann die Ventileinheit 46 auf der Saugseite oder auf der Druckseite des Wasserteils angebracht sein. Eine solche Ventileinheit 46 integriert bei einer besonderen Ausführungsform den ansonsten separat erforderlichen Mehrfachverteiler.

Die in Figur 11 und Figur 12 gezeigten besonderen Ausführungsformen (Verbindungsstücke 44 anstelle eines Mehrfachverbinders bzw. Ventileinheit 46 anstelle einzelner Ventilmodule 16, 18) kommt für ein Wasserteil mit einer Mehrzahl von Trägereinheiten 14 oder einer einstückigen Trägereinheit 14 in Betracht.

Einzelne im Vordergrund stehende Aspekte der hier eingereichten Beschreibung lassen sich damit kurz wie folgt zusammenfassen: Angegeben wird ein Wasserteil (fluid end) oder Wasserteilmodul 12, welches zur Anbringung an einer Kolbenpumpe 10 bestimmt und eingerichtet ist. Dieses umfasst eine lösbar an der Kolbenpumpe 10 anbringbare Trägereinheit 14 und zumindest jeweils ein mit der Trägereinheit 14 lösbar verbundenes oder lösbar verbindbares Saugmodul 16 und Druckmodul 18. Dies bildet die Basis für ein modulares Konzept für das Wasserteil einer insbesondere als Spülpumpe 10 beim Bohrbetrieb fungierenden Mehrkolbenpumpe. Demnach fungiert als Teil des Wasserteils der Spülpumpe 10 eine der Anzahl der Kolben der Spülpumpe 10 entsprechende Anzahl von Wasserteilmodulen 12. Diese sind selbst modular ausgeführt und umfassen eine zur Anbringung an der Spülpumpe 10 bestimmte Trägereinheit 14 sowie zwei lösbar mit der Trägereinheit 14 verbindbare Ventilmodule 16, 18. Bei einer besonderen Ausführungsform sind die Ventilmodule 16, 18 gleich ausgeführt, derart, dass jedes Ventilmodul 16, 18 als saugseitiges Ventilmodul 16 (Saugmodul 16) oder als druckseitiges Ventilmodul 18 (Druckmodul 18) fungieren und sowohl an einer saugseitigen wie auch an einer druckseitigen Anschlussfläche der Trägereinheit 14 angebracht werden kann. Die Ventilmodule 16, 18 sind demnach so ausgeführt und auf Seiten der Trägereinheit 14 sind solche Anschlussmöglichkeiten vorgesehen, dass jedes Ventilmodul 16, 18 an der Saug- oder Druckseite der Trägereinheit 14 anschließbar und somit individuell einsetzbar ist. Insgesamt werden damit auch ein mit solchen Wasserteilmodulen 12 gebildetes Wasserteil einer Spülpumpe 10 und eine Spülpumpe 10 mit solchen Wasserteilmodulen 12 angegeben. Zwei oder mehr zur Anbringung jeweils zweier Ventilmodule 16, 18 bestimmte Trägereinheiten 14 können auch zu einer einzigen Trägereinheit 14 zusammengefasst sein. Diese bilden dann eine Trägereinheit 14 in Form eines Monoblocks. An einer solchen Trägereinheit 14 sind entsprechend zwei mal zwei Ventilmodule 16, 18, drei mal zwei Ventilmodule 16, 18 usw. anbringbar, wobei die Ventilmodule 16, 18 jeweils gleich ausgeführt, untereinander austauschbar und einzeln auswechselbar sind. Allgemein ist eine Trägereinheit 14 der hier vorgeschlagenen Art zur Aufnahme zumindest eines Ventilmodulpaars 16, 18, von denen eines als Saugmodul 16 und eines als Druckmodul 18 fungiert, bestimmt und eingerichtet.

### Bezugszeichenliste

- 10: Kolben- / Spülpumpe
- 12: Wasserteilmodul
- 14: Trägereinheit (Teil des Wasserteilmoduls)
- 16: Ventil- / Saugmodul (Teil des Wasserteilmoduls)
- 18: Ventil- / Druckmodul (Teil des Wasserteilmoduls)
- 20: saugseitiger Mehrfachverteiler
- 22: druckseitiger Mehrfachverteiler
- 24: Kanal (im Innern der Trägereinheit)
- 26: Kanal (im Innern des Ventilmoduls)
- 28: Sackloch (zur Anbringung der Trägereinheit an einer Kolben- / Spülpumpe)
- 30: Sackloch (zur Anbringung eines Ventilmoduls, insbesondere eines als Saugmodul fungierenden Ventilmoduls, an einer Trägereinheit)
- 32: Sackloch (zur Anbringung eines Ventilmoduls, insbesondere eines als Druckmodul fungierenden Ventilmoduls, an einer Trägereinheit)
- 34: Ventil (im Innern eines Ventilmoduls)
- 36: Ventilsitz (im Innern eines Ventilmoduls)
- 38: Ventildeckel (für das Ventil im Innern eines Ventilmoduls)
- 40: Bohrung (im Ventilmodul und parallel zur Hochachse des Ventilmoduls zur Anbringung des Ventilmoduls mit der unteren Anschlussfläche an einer Trägereinheit)
- 42: Bohrung (im Ventilmodul und senkrecht zur Hochachse des Ventilmoduls zur Anbringung des Ventilmoduls mit der seitlichen Anschlussfläche an einer Trägereinheit)
- 44: Verbindungsstück (zur Verbindung benachbarter Ventilmodule)
- 46: Ventileinheit

## Patentansprüche

1. Wasserteilmodul (12) zur Anbringung an einer Kolbenpumpe (10), welches in zumindest drei Komponenten aufgeteilt eine lösbar an der Kolbenpumpe (10) anbringbare Trägereinheit (14) und zumindest jeweils ein mit der Trägereinheit (14) lösbar verbundenes oder lösbar verbindbares Saugmodul (16) sowie zumindest jeweils ein mit der Trägereinheit (14) lösbar verbundenes oder lösbar verbindbares Druckmodul (18) umfasst,
wobei das oder jedes Saugmodul (16) sowie das oder jedes Druckmodul (18) im Innern jeweils einen Ventilsitz (36) für ein Ventil (34) und ein im Ventilsitz (36) platziertes Ventil (34) aufweisen,
wobei die Trägereinheit (14) und das oder jedes Saugmodul (16) sowie das oder jedes Druckmodul (18) so ausgeführt sind, dass die Saug- und Druckmodule (16, 18) untereinander austauschbar sind,
wobei jedes Saug- und Druckmodul (16, 18) zumindest zwei geplante Seitenflächen aufweist, von denen eine als untere Anschlussfläche und eine an die untere Anschlussfläche angrenzende Seitenfläche als seitliche Anschlussfläche fungiert und
wobei ein Kanal (26) im Innern des jeweiligen Saug- und Druckmoduls (16, 18), welcher mittels eines von dem jeweiligen Saug- und Druckmodul (16, 18) umfassten Ventils (34) sperrbar und freigebbar ist, auf einer Seite in der unteren Anschlussfläche und auf der anderen Seite in der seitlichen Anschlussfläche endet.

2. Wasserteilmodul (12) nach Anspruch 1, wobei die Trägereinheit (14) und das oder jedes Druckmodul (18) so ausgeführt sind, dass mehrere Druckmodule (18) untereinander austauschbar sind.

3. Wasserteilmodul (12) nach Anspruch 1 oder 2, wobei die Trägereinheit (14) und das oder jedes Saugmodul (16) so ausgeführt sind, dass mehrere Saugmodule (16) untereinander austauschbar sind.

4. Wasserteilmodul (12) nach einem der vorangehenden Ansprüche, wobei die Saug- und Druckmodule (16, 18) identische Ventile (34) und identische Ventilsitze (36) aufweisen.

5. Wasserteilmodul (12) nach einem der vorangehenden Ansprüche, wobei die Saug- und Druckmodule (16, 18) identisch ausgeführt sind und jedes Saug- und jedes Druckmodul (16, 18) aufgrund jeweils vorgesehener Anschlussmöglichkeit an einer Saug- oder Druckmodulseite der Trägereinheit (14) anschließbar ist.

6. Wasserteilmodul (12) nach einem der vorangehenden Ansprüche, wobei die Trägereinheit (14) zur Aufnahme von mehreren Paaren von Druck- und Saugmodulen (16, 18) bestimmt und eingerichtet ist.

7. Trägereinheit (14) zur Anbringung an einer Kolbenpumpe (10),
wobei die Trägereinheit (14) eine obere und eine daran anschließende seitliche Anschlussfläche aufweist,
wobei mit der Trägereinheit (14), nämlich an deren oberer und seitlicher Anschlussfläche, jeweils lösbar zumindest ein Saugmodul (16) und zumindest ein Druckmodul (18) verbindbar sind und
wobei Saugmodul (16) und Druckmodul (18) gleich ausgeführt sind und
wobei das Saugmodul (16) sowie das Druckmodul (18) im Innern jeweils einen Ventilsitz (36) für ein Ventil (34) und ein im Ventilsitz (36) platziertes Ventil (34) aufweisen.

8. Trägereinheit (14) nach Anspruch 7
mit einem Kanal (24) im Innern der Trägereinheit (14),
wobei der Kanal (24) zu drei Seitenflächen der Trägereinheit (14) offen ist, nämlich zu
einer Seitenfläche, mit welcher die Trägereinheit (14) im angebrachten Zustand an die Kolbenpumpe (10) anschließt,
einer Seitenfläche, an welcher ein als Saugmodul (16) fungierendes Ventilmodul (16, 18) anbringbar oder angebracht ist und
einer Seitenfläche, an welcher ein als Druckmodul (18) fungierendes Ventilmodul (16, 18) anbringbar oder angebracht ist.

9. Wasserteilmodul (12) nach einem der Ansprüche 1 bis 6 mit einer Trägereinheit (14) nach Anspruch 7 oder 8.

10. Wasserteilmodul (12), insbesondere Wasserteilmodul (12) nach einem der Ansprüche 1, 2, 3, 4, 5, 6 oder 9, zur Anbringung an einer Kolbenpumpe (10), welches eine Trägereinheit (14) nach einem der Ansprüche 7 oder 8 und jeweils ein mit der Trägereinheit (14) lösbar verbundenes oder lösbar verbindbares Saugmodul (16) und Druckmodul (18) umfasst,
wobei das Saugmodul (16) sowie das Druckmodul (18) im Innern jeweils einen Ventilsitz (36) für ein Ventil (34) und ein im Ventilsitz (36) platziertes Ventil (34) aufweisen.

11. Wasserteilmodul (12) nach Anspruch 10 mit zumindest einem als Saugmodul (16) und zumindest einem als Druckmodul (18) fungierenden Ventilmodul (16, 18),
wobei jedes Ventilmodul (16, 18) zumindest zwei geplante Seitenflächen aufweist, von denen eine als untere Anschlussfläche und eine an die untere Anschlussfläche angrenzende Seitenfläche als seitliche Anschlussfläche fungiert und
wobei ein Kanal (26) im Innern des Ventilmoduls (16, 18), welcher mittels eines von dem Ventilmodul (16, 18) umfassten Ventils (34) sperrbar und freigebbar ist, auf einer Seite in der unteren Anschlussfläche und auf der anderen Seite in der seitlichen Anschlussfläche endet.

12. Kolbenpumpe (10) mit zumindest einer Trägereinheit (14) nach einem der Ansprüche 7 oder 8 oder zumindest einem Wasserteilmodul (12) nach einem der Ansprüche 10 oder 11.
wobei das oder jedes Ventilmodul (16, 18) zumindest zwei geplante Seitenflächen aufweist, von denen eine als untere Anschlussfläche und eine an die untere Anschlussfläche angrenzende Seitenfläche als seitliche Anschlussfläche fungiert und
wobei ein Kanal (26) im Innern des Ventilmoduls (16, 18), welcher mittels eines von dem Ventilmodul (16, 18) umfassten Ventils (34) sperrbar und freigebbar ist, auf einer Seite in der unteren Anschlussfläche und auf der anderen Seite in der seitlichen Anschlussfläche endet.

13. Kolbenpumpe (10) nach Anspruch 12 mit einer der Anzahl der Kolben der Kolbenpumpe (10) entsprechenden Anzahl von Trägereinheiten (14) nach einem der Ansprüche 7 oder 8 und jeweils einem als Saugmodul (16) und als Druckmodul (18) fungierenden Ventilmodul (16, 18) an jeder Trägereinheit (14),
wobei jedes Ventilmodul (16, 18) im Innern einen Ventilsitz (36) für ein Ventil (34) und ein im Ventilsitz (36) platziertes Ventil (34) aufweist,
wobei jedes Ventilmodul (16, 18) zumindest zwei geplante Seitenflächen aufweist, von denen eine als untere Anschlussfläche und eine an die untere Anschlussfläche angrenzende Seitenfläche als seitliche Anschlussfläche fungiert und
wobei ein Kanal (26) im Innern des Ventilmoduls (16, 18), welcher mittels eines von dem Ventilmodul (16, 18) umfassten Ventils (34) sperrbar und freigebbar ist, auf einer Seite in der unteren Anschlussfläche und auf der anderen Seite in der seitlichen Anschlussfläche endet.

14. Kolbenpumpe (10) nach Anspruch 12 oder 13 mit einer der Anzahl der Kolben der Kolbenpumpe (10) entsprechenden Anzahl von Wasserteilmodulen (12) nach einem der Ansprüche 1, 2, 3, 4, 5, 6, 9, 10 oder 11.

15. Als Spülpumpe (10) zum Pumpen von Bohrklein beim Tiefbohren auf Kohlenstofflagerstätten oder Geothermie fungierende Kolbenpumpe (10) nach einem der Ansprüche 12 bis 14.

## Claims

1. Water part module (12) for attachment to a piston pump (10), which is divided into at least three components and comprises an attachable carrier unit (14) to be mounted detachably on the piston pump (10) and at least one suction module (16) detachably connected or detachably connectable with the carrier unit (14) as well as at least one pressure module (18) detachably connected or detachably connectable with the carrier unit (14),
wherein the or each suction module (16) and the or each pressure module (18) each has inside a valve seat (36) for a valve (34) and a valve (34) placed in the valve seat (36),
wherein the carrier unit (14) and the or each suction module (16) as well as the or each pressure module (18) are designed so that the suction and pressure modules (16, 18) are interchangeable,
wherein each suction and pressure module (16, 18) has at least two side surfaces, evenly machined, one of which serves as a lower connection surface and one of which, adjacent to the lower connection surface, serves as a side connection surface, and
wherein a channel (26) inside the respective suction and pressure module (16, 18), which by means of a valve (34), comprised by the respective suction and pressure modules (16, 18) can be blocked and released, ends on one side in the lower connection surface, and on the other side ends in the side connection surface.

2. Water part module (12) according to Claim 1,
wherein the carrier unit (14) and the or each pressure module (18) are designed so that several pressure modules (18) are interchangeable.

3. Water part module (12) according to Claim 1 or 2,
wherein the carrier unit (14) and the or each suction module (16) are designed so that several suction modules (16) are interchangeable.

4. Water part module (12) according to one of the preceding claims,
wherein the suction and pressure modules (16, 18) are fitted with identical valves (34) and identical valve seats (36).

5. Water part module (12) according to one of the preceding claims,
wherein the suction and pressure modules (16, 18) are executed in an identical manner and wherein each suction module and each pressure module (16, 18), being fitted with adequate connection facilities, are connectable to either a suction module side or a pressure module side of the carrier unit (14).

6. Water part module (12) according to one of the preceding claims,
wherein the carrier unit (14) is meant to be connected, and arranged to be connected, with several pairs of pressure modules and suction modules (16, 18).

7. Carrier unit (14) for attachment to a piston pump (10),
wherein the carrier unit (14) has an upper connection surface, and a side connection surface, adjacent to it,
wherein with the carrier unit (14), that is, on its upper and side connection surface, at least one suction module (16) and at least one pressure module (18) are detachably connectable, and
wherein suction module (16) and pressure module (18) are executed in an identical manner and
wherein both the suction module (16) and the pressure module (18) each has inside a valve seat (36) for a valve (34) and a valve (34) placed in the valve seat (36).

8. Carrier unit (14) according to claim 7,
with a channel (24) inside the carrier unit (14),
wherein the channel (24) is open towards three side surfaces of the carrier unit (14), that is, towards
a side surface with which the carrier unit (14) in the mounted state connects to the piston pump (10),
a side surface to which a valve module (16, 18), functioning as a suction module (16) is connected or connectable, and
a side surface to which a valve module (16, 18), functioning as a pressure module (18) is connected or connectable.

9. Water part module (12) according to one of the claims 1 to 6,
with a carrier unit (14) according to claim 7 or 8.

10. Water part module (12), especially water part module (12) according to one of the claims 1, 2, 3, 4, 5, 6 or 9, for mounting on a piston pump (10),
comprising a carrier unit (14) according to one of the claims 7 or 8 and one suction module (16) and pressure module (18) each, detachably connected or detachably connectable with the carrier unit (14),
wherein both the suction module (16) and the pressure module (18) each has inside a valve seat (36) for a valve (34) and a valve (34) placed in the valve seat (36).

11. Water part module (12) according to claim 10 with at least one valve module (16, 18), functioning, respectively, as a suction module (16) and a pressure module (18),
wherein each valve module (16, 18) has at least two side surfaces, evenly machined, one of which serves as a lower connection surface and one side surface, adjacent to the lower connection surface, serves as a side connection surface, and
wherein a channel (26) within the valve module (16, 18), capable to be blocked and released by means of a valve (34), comprised by the valve module (16, 18), ends, on one side, in the lower connection surface and on the other side, in the side connection surface.

12. Piston pump (10) with at least one carrier unit (14) according to one of the claims 7 or 8, or at least one water part module (12) according to one of the claims 10 or 11,
wherein the or each valve module (16, 18) has at least two side surfaces, evenly machined, one of which serves as a lower connection surface and one side surface, adjacent to the lower connection surface, serves as a side connection surface, and
wherein a channel (26) within the valve module (16, 18), capable to be blocked and released by means of a valve (34), comprised by the valve module (16, 18), and ends, on one side, in the lower connection surface and on the other side, in the side connection surface.

13. Piston pump (10) according to claim 12 with a number of carrier units (14) that corresponds to the number of pistons of the piston pump (10) according to one of the claims 7 or 8, and in each case a valve module (16, 18) functioning, respectively, as a suction module (16) and as a pressure module (18) at each carrier unit (14),
wherein each valve module (16, 18) has within itself a valve seat (36) for a valve (34) and a valve (34) placed within the valve seat (36),
wherein each valve module (16, 18) has at least two side surfaces, evenly machined, one of which serves as a lower connection surface and one side surface, adjacent to the lower connection surface, serves as a side connection surface, and
wherein a channel (26) within the valve module (16, 18), capable to be blocked and released by means of a valve (34), comprised by the valve module (16, 18), and ends, on one side, in the lower connection surface and on the other side, in the side connection surface.

14. Piston pump (10) according to claim 12 or 13 with a number of water part modules (12) corresponding to the number of pistons of the piston pump (10) according to one of the claims 1, 2, 3, 4, 5, 6, 9, 10 or 11.

15. Piston pump (10), functioning as a flushing pump (10) for the pumping of drill residues in the deep drilling of carbon deposits or in geothermic applications according to one of the claims 12 to 14.

## Revendications

1. Module de partie hydraulique (12) pour la fixation à une pompe à piston (10), lequel est divisé en au moins trois composants, une unité de support (14) qui peut être fixée de manière amovible à la pompe à piston (10) et au moins un module d'aspiration (16) qui est ou peut être connecté de façon amovible à l'unité de support (14) et au moins un module de pression (18) qui est ou peut être connecté de façon amovible à l'unité de support (14),
dans lequel le ou chaque module d'aspiration (16) et le ou chaque module de pression (18) présentent à l'intérieur respectivement un siège de soupape (36) pour une soupape (34) et une soupape (34) placée dans le siège de soupape (36),
dans lequel l'unité de support (14) et le ou chaque module d'aspiration (16) et le ou chaque module de pression (18) sont conçus de sorte que les modules d'aspiration et de pression (16, 18) sont interchangeables,
dans lequel chaque module d'aspiration et de pression (16, 18) présente au moins deux surfaces latérales prévues, dont l'une fonctionne en tant que surface de connexion inférieure et une surface latérale adjacente à la surface de connexion inférieure fonctionne en tant que surface de connexion latérale et
dans lequel un canal (26) à l'intérieur du module d'aspiration et de pression respectif (16, 18), lequel peut être verrouillé et déverrouillé au moyen d'une soupape (34) incluse dans le module d'aspiration et de pression respectif (16, 18), se termine d'un côté dans la surface de connexion inférieure et de l'autre côté dans la surface de connexion latérale.

2. Module de partie hydraulique (12) selon la revendication 1,
dans lequel l'unité de support (14) et le ou chaque module de pression (18) sont conçus pour que plusieurs modules de pression (18) soient interchangeables.

3. Module de partie hydraulique (12) selon les revendications 1 ou 2,
dans lequel l'unité de support (14) et le ou chaque module d'aspiration (16) sont conçus pour que plusieurs modules d'aspiration (16) soient interchangeables.

4. Module de partie hydraulique (12) selon l'une quelconque des revendications précédentes,
dans lequel les modules d'aspiration et de pression (16, 18) présentent des soupapes identiques (34) et des sièges de soupape identiques (36).

5. Module de partie hydraulique (12) selon l'une quelconque des revendications précédentes,
dans lequel les modules d'aspiration et de pression (16, 18) sont identiques et chaque module d'aspiration et chaque module de pression (16, 18) en raison de l'option de connexion prévue respective sur un côté module d'aspiration ou de pression de l'unité de support (14) peut être connecté.

6. Module de partie hydraulique (12) selon l'une quelconque des revendications précédentes,
dans lequel l'unité de support (14) est destinée à et agencée pour accueillir plusieurs paires de modules de pression et d'aspiration (16, 18).

7. Unité de support (14) pour la fixation à une pompe à piston (10),
dans lequel l'unité de support (14) présente une surface de connexion supérieure et une surface de connexion latérale attenante,
dans laquelle au moins un module d'aspiration (16) et au moins un module de pression (18) peuvent être connectés de manière amovible à l'unité de support (14), à savoir sur sa surface de connexion supérieure et latérale, et
dans laquelle le module d'aspiration (16) et le module de pression (18) sont identiques et
dans lequel chaque module d'aspiration (16) et le module de pression (18) présentent à l'intérieur respectivement un siège de soupape (36) pour une soupape (34) et une soupape (34) placée dans le siège de soupape (36).

8. Unité de support (14) selon la revendication 7 avec un canal (24) à l'intérieur de l'unité de support (14),
dans lequel le canal (24) est ouvert sur trois surfaces latérales de l'unité de support (14), à savoir vers
une surface latérale avec laquelle l'unité de support (14) se connecte à la pompe à piston (10) à l'état attaché,
une surface latérale sur laquelle un module de soupape (16, 18) fonctionnant comme module d'aspiration (16) peut être fixé ou est fixé et
une surface latérale sur laquelle un module de soupape (16, 18) fonctionnant comme module de pression (18) peut être fixé ou est fixé.

9. Module de partie hydraulique (12) selon l'une quelconque des revendications 1 à 6 avec une unité de support (14) selon la revendication 7 ou 8.

10. Module de partie hydraulique (12), en particulier module de partie hydraulique (12) selon l'une quelconque des revendications 1, 2, 3, 4, 5, 6 ou 9,
destiné à être fixé à une pompe à piston (10), lequel comprend une unité de support (14) selon l'une quelconque des revendications 7 ou 8 et respectivement un module d'aspiration (16) et un module de pression (18) qui est ou peut être connecté de manière amovible à l'unité de support (14), dans lequel le module d'aspiration (16) et le module de pression (18) présentent à l'intérieur respectivement un siège de soupape (36) pour une soupape (34) et une soupape (34) placée dans le siège de soupape (36).

11. Module de partie hydraulique (12) selon la revendication 10 avec au moins un module de soupape (16, 18) fonctionnant en tant que module d'aspiration (16) et au moins un fonctionnant en tant que module de pression (18),
dans lequel chaque module de soupape (16, 18) présente au moins deux surfaces latérales prévues, dont l'une fonctionne en tant que surface de connexion inférieure et une surface latérale adjacente à la surface de connexion inférieure fonctionne en tant que surface de connexion latérale et
dans lequel un canal (26) à l'intérieur du module de soupape (16, 18), lequel peut être verrouillé et déverrouillé au moyen d'une soupape (34) incluse dans le module de soupape (16, 18), se termine d'un côté dans la surface de connexion inférieure et de l'autre côté dans la surface de connexion latérale.

12. Pompe à piston (10) avec au moins une unité de support (14) selon l'une quelconque des revendications 7 ou 8 ou au moins un module de partie hydraulique (12) selon l'une quelconque des revendications 10 ou 11,
dans lequel le ou chaque module de soupape (16, 18) présente au moins deux surfaces latérales prévues, dont l'une fonctionne en tant que surface de connexion inférieure et une surface latérale adjacente à la surface de connexion inférieure fonctionne en tant que surface de connexion latérale et
dans lequel un canal (26) à l'intérieur du module de soupape (16, 18), lequel peut être verrouillé et déverrouillé au moyen d'une soupape (34) incluse dans le module de soupape (16, 18), se termine d'un côté dans la surface de connexion inférieure et de l'autre côté dans la surface de connexion latérale.

13. Pompe à piston (10) selon la revendication 12 avec un nombre d'unités de support (14) correspondant au nombre de pistons de la pompe à piston (10) selon l'une quelconque des revendications 7 ou 8 et respectivement un module de soupape (16, 18) fonctionnant en tant que module d'aspiration (16) et en tant que module de pression (18) sur chaque unité de support (14),
dans lequel chaque module de soupape (16, 18) présente à l'intérieur un siège de soupape (36) pour une soupape (34) et une soupape (34) placée dans le siège de soupape (36),
dans lequel chaque module de soupape (16, 18) présente au moins deux surfaces latérales prévues, dont l'une fonctionne en tant que surface de connexion inférieure et une surface latérale adjacente à la surface de connexion inférieure fonctionne en tant que surface de connexion latérale et
dans lequel un canal (26) à l'intérieur du module de soupape (16, 18), lequel peut être verrouillé et déverrouillé au moyen d'une soupape (34) incluse dans le module de soupape (16, 18), se termine d'un côté dans la surface de connexion inférieure et de l'autre côté dans la surface de connexion latérale.

14. Pompe à piston (10) selon la revendication 12 ou 13 avec un nombre de modules de partie hydraulique (12) selon l'une quelconque des revendications 1, 2, 3, 4, 5, 6, 9, 10 ou 11 correspondant au nombre de pistons de la pompe à piston (10).

15. Pompe à piston (10) fonctionnant en tant que pompe de rinçage (10) pour le pompage de déblais de forage en forage profond sur gisements de carbone ou géothermie selon l'une quelconque des revendications 12 à 14.
